# EUROPEAN PATENT APPLICATION

(11) **EP 4 560 624 A1**
(43) Date of publication of application: **28.05.2025**
(21) Application number: 23212249.9
(22) Date of filing: 27.11.2023
(51) Int. Cl.: G10L 19/005, H04H 60/51

(54) **ERROR CONCEALMENT METHOD AND APPARATUS FOR A MOBILE RADIO**

(71) Applicant: NXP B.V., 5656 AG Eindhoven (NL)
(72) Inventor: Guatama, Temujin, 5656AG Eindhoven (NL)
(74) Representative: Miles, John Richard

(57) **Abstract**

An error concealment method and apparatus for a mobile radio is described. A current location value is provided by a spatial location receiver. A signal quality parameter associated with the current location value is retrieved from a database if available. If the signal quality parameter is available, a first error concealment method for a received audio signal is selected and applied dependent on the signal quality parameter value. If the signal quality parameter associated with the current location value is not available, and the received audio signal is corrupted, a second (default) more conservative error concealment method is applied to the received audio signal.

## Description

### FIELD

This disclosure relates to an error concealment method and apparatus for a mobile radio.

### BACKGROUND

In a typical digital radio system used in a vehicle, herein referred to as a mobile radio, when reception conditions degrade, it may not be possible to decode the audio frame and to obtain the desired digital audio signal. The data signal may have become corrupted in transmission, typically resulting in a muted frame containing zeros at the source decoder output. Under these conditions it is desirable to apply an error concealment method to the audio signal.

A fast mute, where the audio drops out in a time span of one audio frame in the order of magnitude of 30ms is one error concealment strategy. This requires a look-ahead buffer of one audio frame. A fast mute may be perceived as too abrupt, and so alternative methods of concealing corrupted audio frames may use frame repetition, noise substitution and prediction.

In other situations, a simulcast, i.e., a secondary broadcast of the same radio program from a different source, such as for example an analog broadcast on FM or a digital broadcast on internet radio, can be present next to the primary broadcast. If the audio data of the primary broadcast is corrupted, the system can "blend" to the audio signal of the secondary broadcast.

### SUMMARY

Aspects of the disclosure are defined in the accompanying claims. In first aspect, there is provided a method of error concealment of an audio signal for a mobile radio, the method comprising: receiving a current location value provided by a spatial location receiver; determining whether at least one signal quality parameter associated with the current location value is available in a database; in response to the at least one signal quality parameter being available: selecting a first error concealment method for a received audio signal dependent on the at least one signal quality parameter; applying the first error concealment method to the received audio signal; and in response to the at least one signal quality parameter associated with the current location value not being available, and determining that the received audio signal is corrupted: applying a second error concealment method to the received audio signal.

In some embodiments, the at least one signal quality parameter comprises an audio corruption time duration. In some embodiments, in response to the audio corruption time duration being below a first time threshold value, the first error concealment method comprises frame repetition. In some embodiments, in response to the audio corruption time duration being below a first time threshold value, the first error concealment method comprises switching to a secondary broadcast signal that is aligned to the received audio signal in at least one of time, spectrum and level.

In some embodiments, in response to the audio corruption time duration being above a second time threshold value, the first error concealment method comprises at least one of audio fade-in and audio fade-out. In some embodiments, in response to the audio corruption time duration being above a second time threshold value, the first error concealment method comprises switching to a secondary broadcast signal and fading out at least one of a spectral and level alignment to the received audio signal. In some embodiments, the at least one signal quality parameter comprises an audio corruption rate. In some embodiments, the method further comprises updating a database, the database comprising a plurality of database entries, each database entry comprising a location value and a signal quality parameter.

In some embodiments, the method further comprises, in response to the at least one signal quality parameter not being available: determining the at least one signal quality parameter of the received audio signal; and updating the database with a database entry comprising the at least one signal quality parameter and the current location value. In some embodiments, each database entry further comprises at least one of a timestamp value and a location visit count value, and the method further comprises updating the database with at least one of a timestamp value and a location visit count value for the current location.

In some embodiments, updating the database comprises: in response to the number of entries exceeding a maximum entry value, removing a selection of the plurality of database entries based on at least one of the timestamp value and the location visit count value of each database entry. In some embodiments, determining the at least one signal quality parameter comprises determining that the received audio signal is corrupted. In some embodiments, the at least one signal quality parameter comprises a proportion of a number of corrupted audio frames during one of a predetermined time duration and predetermined distance.

In a second aspect, there is provided a controller for a mobile radio, the controller comprising: a navigation input configured to be coupled to a spatial location receiver; a radio reception condition input configured to receive a radio reception condition signal; an audio input configured to be coupled to an output of a radio receiver; and an audio output; wherein the controller is configured to: receive a current location value provided by a spatial location receiver; determine whether at least one signal quality parameter associated with the current location value is available in a database; in response to the at least one signal quality parameter associated with the current location being available: select a first error concealment method for the received audio signal dependent on the at least one signal quality parameter; apply the first error concealment method to the received audio signal; and in response to the at least one signal quality parameter associated with the current location not being available, the controller is further configured to: predict whether the received audio signal will be corrupted from the radio reception condition signal; and apply a second error concealment method to the received audio signal in response to determining that the received audio signal will be corrupted.

In some embodiments, the controller further comprises: a control module coupled to a database, the control module having a first control module input coupled to the navigation input, a second module input coupled to the radio reception condition input and a control module output; an error concealment module having a first error concealment input coupled to the audio input, a second error concealment input coupled to the control module output, and an error concealment output coupled to the audio output; wherein in the control module is configured to: receive the current location value; determine whether the at least one signal quality parameter associated with the current location value is available in the database; in response to the at least one signal quality parameter being available: select a first error concealment method for the received audio signal dependent on the at least one signal quality parameter; control the error concealment module to apply the first error concealment method to the received audio signal; in response to the at least one signal quality parameter not being available: determine whether the received audio signal will be corrupted from the radio reception condition signal; control the error concealment module to apply the second error concealment method to the received audio signal.

In some embodiments, the at least one signal quality parameter comprises an audio corruption time duration, and wherein in response to the audio corruption time duration being below a first time threshold value, the first error concealment method comprises frame repetition.

In some embodiments, the at least one signal quality parameter comprises an audio corruption time duration, and wherein in response to the audio corruption time duration being below a first time threshold value, the first error concealment method comprises switching to a secondary broadcast signal that is aligned to the received audio signal in at least one of time, spectrum and level.

In some embodiments, the at least one signal quality parameter comprises an audio corruption time duration, and wherein in response to the audio corruption time duration being above a second time threshold value, the first error concealment method comprises at least one of audio fade-in and audio fade-out.

Embodiments of the controller may be included in a mobile radio receiver, the mobile receiver further comprising: a series arrangement of a tuner, a demodulator, a channel decoder, and a source decoder; wherein the tuner is configured to receive a signal from an antenna, and the source decoder is configured to output a digital audio signal to the controller. The mobile radio receiver may further comprise a navigation module coupled to the navigation input of the controller.

### BRIEF DESCRIPTION OF THE DRAWINGS

In the figures and description like reference numerals refer to like features. Embodiments are now described in detail, by way of example only, illustrated by the accompanying drawings in which:
Figure 1 shows a mobile radio according to an embodiment.
Figure 2 illustrates a further detail of part of the mobile radio of figure 1.
Figure 3 shows a plot indicating an example variation of the bit error rate of the fast information channel of a digital audio broadcast (DAB+) over time during a vehicle drive.
Figure 4 shows an expanded detail of the plot of figure 3.
Figure 5 shows a method of error concealment for a mobile radio according to an embodiment.
Figure 6 illustrates a method of error concealment for a mobile radio according to an embodiment.
Figure 7 shows a method of error concealment for a mobile radio according to an embodiment.
Figure 8 shows a method of updating a database used by the error concealment methods of figure 5, figure 6 or figure 7.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

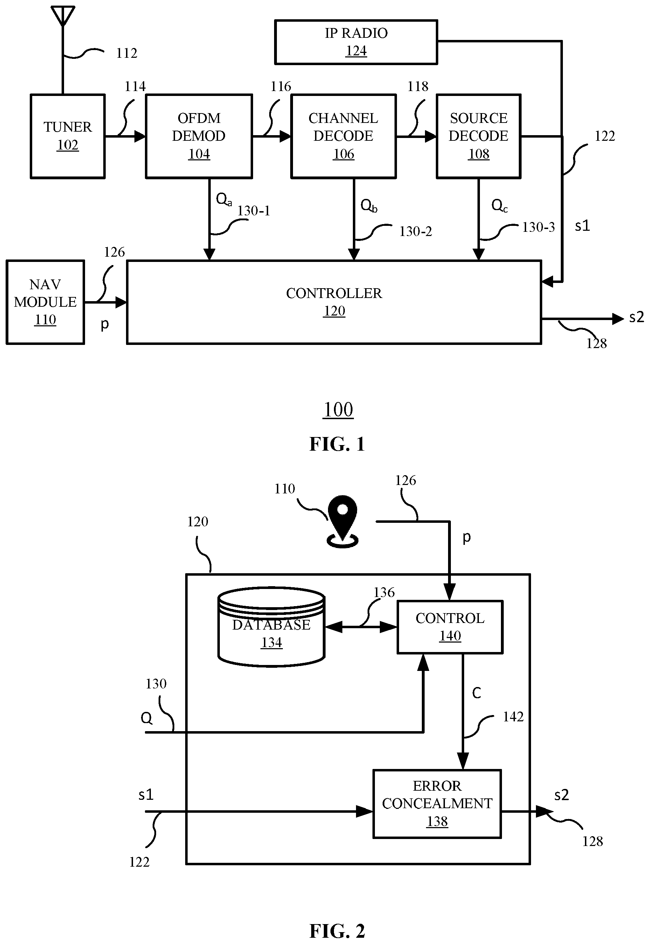

Figure 1 shows a mobile radio 100 according to an embodiment. Mobile radio 100 may for example be part of a vehicle radio or vehicle infotainment system. A first receiver which may be a receiver for DAB digital radio broadcasts includes a tuner 102, orthogonal frequency division multiplexing (OFDM) demodulator 104, channel decoder 106 and source decoder 108. An antenna 112 is connected to the tuner 102. The tuner output 114 is connected to an input of the OFDM demodulator 104. The OFDM demodulator output 116 is connected to an input of the channel decoder 106. A channel decoder output 118 is connected to an input of the source decoder 108. An output of the source decoder 108, which may include signals from multiple broadcasts, is connected to an audio input 122 (s1) of a controller 120. Optionally the mobile radio 100 may have a second receiver for example internet protocol (IP) radio 124 having a signal output connected to the audio input 122 (s1). The controller 120 may have one or more radio reception condition inputs 130-1 (Qa), 130-2 (Qb), 130-3 (Qc) connected to respective outputs of the OFDM demodulator 104, channel decoder 106 and source decoder 108. The controller 120 may have an audio output 128 (s2) and a navigation input 126 (p) connected to a navigation module 110 which may for example be a global positioning system (GPS) receiver or other spatial location receiver having means of determining a location. Other radios may also include FM/AM analog receivers or other digital radio receivers which may provide multiple sources for the same audio content.

The antenna signal from antenna 112 is translated into a digital data signal using the tuner 102 and OFDM demodulator 104. The digital data signal is decoded into a digital received audio signal by channel decoder 106 yielding a bit-stream or byte-stream and a source decoder 108. The source decoder 108 generates frames of received digital audio when the data at its input is valid. Similarly the IP radio receiver 124 may output digital audio frames.

Figure 2 shows a detail of the controller 120 for mobile radio 100. The controller 120 includes a control module 140, a memory including a location database 134 and an error concealment module 138. The control module 140 has inputs connected to navigation input 126 and radio reception condition inputs 130 and a control module output 142 connected to the error concealment module 138. The control module 140 is connected 136 to location database 134. The error concealment module 138 has an input connected to the audio input 122 and an output connected to the audio output 128. The controller 120 may receive the input audio stream s1, location information p, and radio reception condition signals Qₐ, Q_{b}, Q_{c} which may be used to predict whether the audio signal will be corrupted. The controller 120 may derive one or more signal quality parameters from the radio reception condition signals Qₐ, Q_{b}, Q_{c}. The signal quality parameters may be for example one or more of a bit error rate, a time duration over which the audio signal is considered to be corrupted, or a distance from the present location over which the audio signal is considered to be corrupted. The time duration over which the audio signal is considered to be corrupted may be determined by for example evaluating if a bit error rate is greater than a threshold value for a predetermined time duration. The distance from the present location over which the audio signal is considered to be corrupted may be determined by for example evaluating if a bit error rate is greater than a threshold value for a predetermined distance from the current location. The controller 120 may be implemented in hardware or a combination of hardware and software.

In operation, the digital audio signal s1 is input to the error concealment module 138. The operation of the Error Concealment module 138 is controlled by the control module 140 using a control signal ("C"). The control module 140 further receives an input p from the navigation module 110 indicating the current location of the vehicle, and exchanges data with the database 134.

The error concealment module 138 may operate in several modes, depending on how long the audio is expected to be corrupted. In a system where only a single broadcast is available, there may be for example a short-time concealment strategy, that uses frame repetition, and a long-term concealment strategy, that uses audio fade-in and fade-out. Other modes and concealment strategies are possible. Under normal reception conditions where no error concealment is required, the digital audio signal may be passed through unmodified to the audio output 128, i.e. signals s1 and s2 are the same.

In a system where a simulcast is available, there may be for example three modes of error concealment. A short-time mode may switch to an aligned secondary broadcast for a relatively short time duration and then back to the original source, for example in the case of a very short audio mute. A medium-time mode may switch to an aligned secondary broadcast for a relatively longer time duration before switching back to the primary broadcast. This may be applicable for example in a location where there is intermittent audio. A long-time mode may switch to an aligned secondary broadcast for an indeterminant time duration. The error concealment module 138 may gradually remove the alignment which may be one or more of level alignment, spectral alignment and time alignment with the original broadcast source. Removing the alignment may be required for example when the first reception quality is very poor because the vehicle is out of range of the primary broadcast. In addition removing the alignment in the long-time mode may be preferred, because the alignment processing is often estimated on a short-term difference between the broadcasts, and may not be valid over a longer period of time, as it may heavily depend on the frequency content at the time of the signal estimation.

The database 134 may store information regarding the spatial locations where audio corruption has occurred for a specific broadcast, and what type of corruption can be expected (e.g., short- or longer-time). The database 134 may contain locations where audio corruption is expected in a given broadcast and a corruption rate representing the nature of the audio corruption. The spatial locations can be chosen to be at least spaced by a certain distance, such as 20 metres, to limit the number of entries in the database.

The control module 140 may determine the preferred concealment strategy, and update the database. When the signal quality metrics Q indicate a possible audio corruption, or if the audio data becomes corrupted, the control module 140 queries the database 134 with the current broadcast and the current spatial location Pc, which the control module 140 receives from the navigation module 110, either periodically, or only when requested. The response to the query is the corruption rate C(P), for example related to the length or rate of the audio data corruption, on the basis of which the preferred error concealment strategy is determined, which is sent to the error concealment module 138 via control signal C. The corruption rate C(P) is an example of a signal quality parameter. The control signal C may also control the audio or blending gain, instead of or as well as the preferred concealment mode. To update the database 134, the control module 140 may evaluate the audio corruption during a period of time to determine the length or rate of the audio corruption. This information may be used to update the database 134 by either adding a new entry, or adapting an existing one.

The corruption rate, C(P), can be monitored continuously by the control module 140 and may be representative of the type of audio signal corruption. In one example, the corruption rate, C(P), is the length of the audio corruption. In this example, the control module 140 measures the time or the distance during which the audio signal is corrupted. In another example, the corruption rate is the proportion of a certain time or distance for which the audio signal is corrupted. In one example, a running buffer may be maintained as a memory of the audio corruptions, for example coded as a 0/1, which is updated each audio frame. If the length of the running buffer is equal to 1 second (in frames), the average value of the elements corresponds to the proportion of corrupted audio frames in the past second.

In operation, the radio 100 may receive radio reception condition signals Q that are predictive of audio signal corruption from one or more of the OFDM demodulator 104, the channel decoder 106 and the source decoder 108, as well as a binary flag corresponding to the current or future broadcast if there is a look-ahead mechanism audio frame (intact or corrupted). When the radio reception condition signals Q indicate a pending audio signal corruption i.e. if one or more of the metrics are above or below a certain threshold value, the control module 140 queries the database 134 with the current broadcast and current spatial location Pc obtained from the navigation module 110. If the current spatial location is not sufficiently close to a location stored in the database 134, a default conservative error concealment strategy is started, such as a slow fade-out. If the location is sufficiently close to a location stored in the database 134, the corruption rate C(Pc) is retrieved, on the basis of which an appropriate error concealment strategy can be determined. When the audio signal s1 is corrupted or when it becomes intact again, the control module 140 can update the database 134. In this way, the error concealment is conservative, resulting in more muted audio to prevent intermittent audio, if the spatial location is not in the database 134, and less conservative resulting in less muted audio if the spatial location has been visited before and is therefore in the database 134.

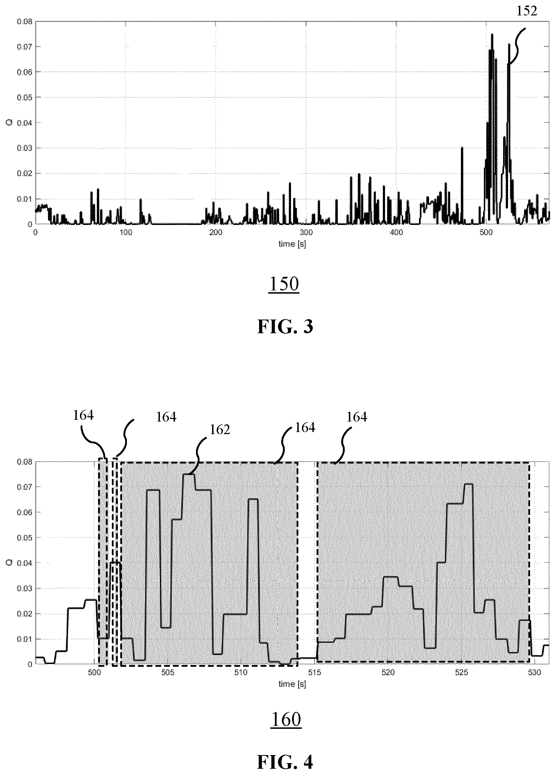

Figure 3 shows an example plot 150 of a radio reception condition quality metric recorded during a test drive. The y-axis Q shows the bit error rate (BER) of the Fast Information Channel (FIC) of a DAB+ broadcast varying between 0 and 0.08. The x-axis shows time between 0 and 600 seconds, corresponding to varying locations as the vehicle moves. A high BER factor indicates a high possibility of audio signal corruption. Referring to the line 152, it can be observed that the BER is below 0.025 most of the time with one segment, approximately between t = 500s and t = 530s, where it is generally higher than 0.025 apart from a short segment with a low BER factor in the middle.

Figure 4 shows a plot 160 illustrating a portion of plot 150, with additional zones 164 that show when audio signal corruption actually occurs. Even though the FIC BER line 162 is indicative of audio signal corruption, it is difficult to correlate the measure with actual signal corruption: the audio signal drops do not always coincide with high FIC BER values or vice versa. It can be observed that the first audio signal corruption occurs around t = 500s, and that the audio recovers twice, shortly. This is an example of intermittent audio, which needs to be avoided as it is perceived as annoying. The audio signal recovers around t = 514s, but only for about 1 second, even though the FIC BER is relatively low in that segment. This behavior is consistent and it is linked to the spatial location as the vehicle enters a short tunnel during this segment.

By having the problem location stored, with corresponding corruption rates and broadcast from the driving history, the error concealment may be controlled such that the audio remains absent until the end of the tunnel. The database size is limited, and may not retain all locations that have been visited. In one example only the most recent information may be retained, by sorting the entries by date and only retain the more recent entries. In this way, a location that was not visited for a long time is deleted (shifted out of) the database. In other examples, information regarding locations that are frequently visited may be retained, by storing information of the number of times a location has been visited in the past month or year. An entry is then retained if this number is sufficiently high. Dynamically updating the database 134 avoids having to use a fixed database which would need to contain very high-resolution maps for each broadcast. This is because audio signal degradation is different for different tuner frequencies and even for different channels in the same multiplex.

In a mobile radio such as an automotive radio system, the reception quality can vary along a given route, but in a fairly consistent manner. When, for example commuting to work daily, there can be a number of locations where the audio data always becomes corrupted. A typical error concealment system will consistently fade-in and fade-out the audio signal or blend to another broadcast too conservatively, because there is no prior or built-up knowledge about the audio degradation. This can become especially annoying when occurring in specific locations on a daily route.

Some examples use radio reception condition metrics to predict when audio corruption is going to occur. However, due to the error resilience in the digital radio standards, a moderate degree of antenna signal degradation will not cause audio signal corruption. Indications of pending audio corruption can be obtained from the tuner, OFDM demodulator and (channel and source) decoder stages and an audio fade-out can be initiated when there are indications that audio corruption is expected. However, this may result in muting the audio signal, even when there is no audio signal corruption.

After a fade-out, when the audio data becomes intact again, the audio signal can be faded in. This is usually done if there is reasonable confidence that the audio data will stay intact for a considerable time, to avoid intermittent audio. Therefore, a safety time period is required, in which the audio signal is evaluated, before an audio fade-in is started. If this safety time period is too short, there is a risk of intermittent audio, and when it is too long, the method becomes over-conservative.

In other situations, a simulcast, i.e., a secondary broadcast of the same radio program from a different source such as an analog broadcast on FM or a digital broadcast on internet radio may be available, in addition to the primary broadcast. If the audio data of the primary broadcast is corrupted, the system can "blend" the received audio signal of the secondary broadcast. This often requires alignment of the secondary broadcast such that the audio content is closer to that of the primary broadcast for example in level, frequency and stereo image, in order to make the transition more seamless. When the data of the primary broadcast is corrupted for a longer time, the alignment may be removed gradually such that the original secondary broadcast is played. The alignment of two broadcasts is often based on a short-term estimate of the difference, and may not be valid for longer periods of time. However, if the audio is corrupted for only a short time, it is better not to remove the alignment, as this could result in audible artifacts. The control of the blending process is similar to that of the fading methods, and similar decisions need to be taken on when to blend to the secondary broadcast and when to go back to the primary, and on when to gradually remove the alignment.

Consequently, the control of the error concealment on the basis of radio reception condition signals may lead to an over-conservative error concealment strategy: because of error correction methods in the decoder, a degraded reception quality can still yield an intact audio signal. As a result, a fade-out is sometimes started even when the audio signal is intact. Furthermore, a fade-in of the audio requires an additional safety time period in which the audio signal is evaluated leading to a longer time period without audio.

The mobile radio 100 allows the use of prior knowledge of the audio signal quality of a broadcast in specific locations, such that appropriate concealment strategies can be chosen. The mobile radio 100 may use information from a navigation system to build or adapt a database that can be used to determine the appropriate error concealment strategy.

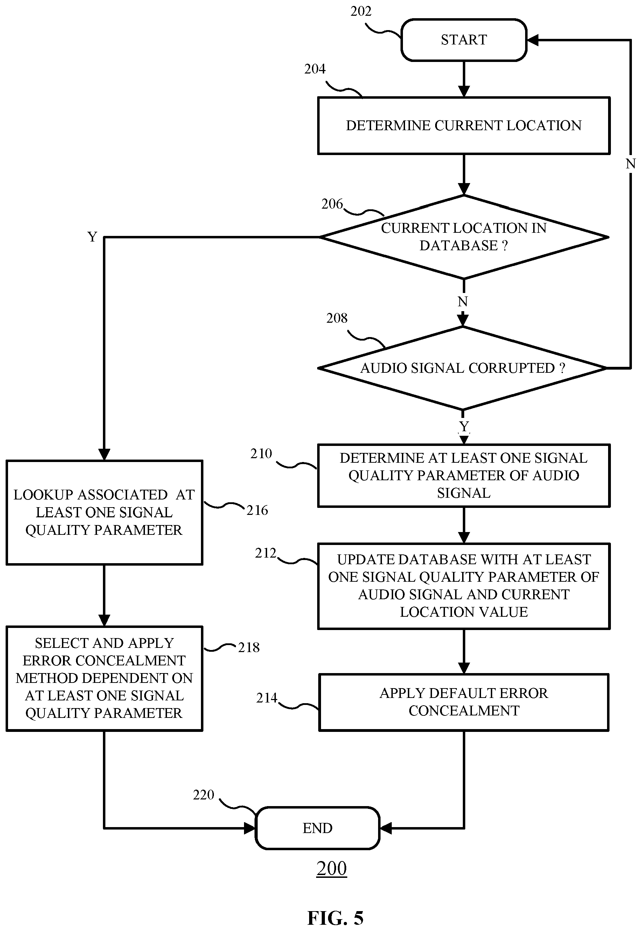

Figure 5 shows a method of error concealment 200 for a mobile radio, for example mobile radio 100 according to an embodiment. In step 202, the method starts. In step 204, a current location is determined for example by a GPS receiver. In step 206, the method checks to see whether the current location is in a database. If the current location is not in the database, in step 208, the method checks to see whether the audio signal is corrupted. If the audio signal is not corrupted, the method returns to the start (step 202) and no error concealment is applied i.e. the audio signal is unmodified. Otherwise, following step 208, in step 210, the method determines at least one signal quality parameter of the audio signal. Following from step 210, in step 212 the database is updated with a database entry including the at least one audio signal parameter and the associated (current) location value. The method then applies a default error concealment method in step 214. The method then ends in step 220. Returning to step 206, if the current location is in the database, then in step 216 the associated signal quality parameter or parameters are retrieved from the database. In step 218 an error concealment method is selected and applied dependent on the at least one signal quality parameter.

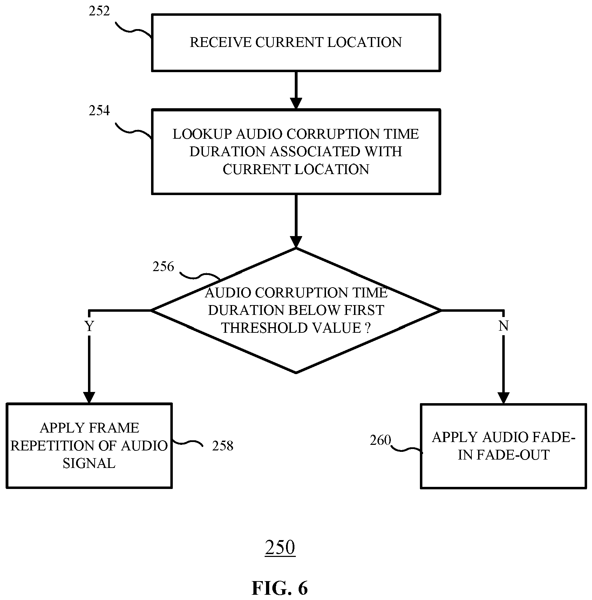

Figure 6 shows a method of error concealment 250 for a mobile radio with a single source of a broadcast channel according to an embodiment. In step 252, the current location is received from a spatial location receiver such as a GPS or other receiver. In step 254 the method looks up an audio corruption time duration associated with the current location from a database. The audio corruption time duration is an example of a signal quality parameter. In step 256 the method determines whether the audio corruption time duration is below a first threshold value. If the audio corruption time duration is below the first threshold value, the method proceeds to step 258 and applies frame repetition of the audio signal. Otherwise, the method proceeds to step 260 and applies audio fade-in and fade-out.

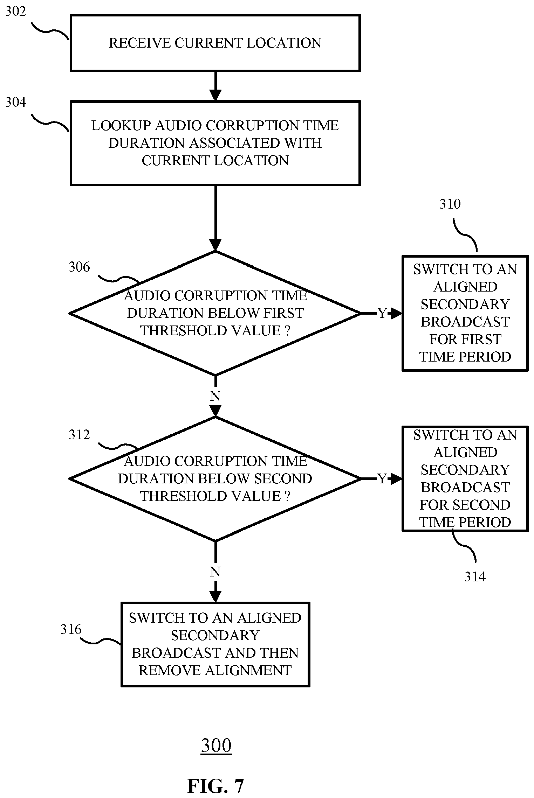

Figure 7 shows a method of error concealment 300 for a mobile radio with a secondary source of a broadcast channel according to an embodiment. In step 302, the current location is determined. In step 304 the method looks up an audio corruption time duration associated with the current location. The audio corruption time duration is an example of a signal quality parameter. Step 306 determines whether the audio corruption time duration is below a first threshold value. If the audio corruption time duration is below the first threshold value, the method proceeds to step 310 and switches to an aligned secondary broadcast for a first time period, after which the audio output reverts to the primary broadcast. Returning to step 306, if the audio corruption time duration is equal to or above the first threshold value, the method proceeds to step 312 and determines whether the audio corruption time duration is below a second threshold value which is greater than the first threshold value. If the audio corruption time duration is below the second threshold value, the method proceeds to step 314 and switches to an aligned secondary broadcast for a second time period which is longer than the first time period of step 310. After the second time period the audio output reverts to the primary broadcast. Returning to step 312, if the audio corruption time duration is above or equal to the second threshold value, the method proceeds to step 316 and switches to a secondary broadcast which is aligned for a limited time period after which the alignment is removed. The secondary broadcast is then effectively used as the primary broadcast.

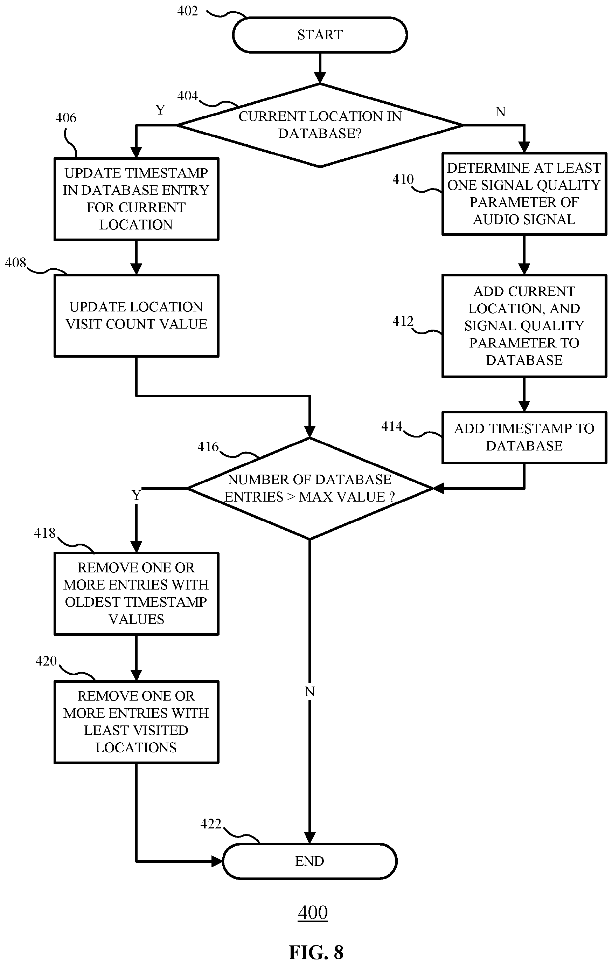

Figure 8 shows a method of updating a database 400 for use by embodiments of the error concealment methods and apparatus described herein, such as for example mobile radio 100 and error concealment methods 200, 250, 300. In step 402 the method starts. In step 404 the method checks to see whether the current location is in the database. If the current location is in the database, in step 406 the timestamp in the database entry is updated for the current location. Following from step 406, in step 408 the location visit count value for the current location is updated (incremented). Returning to step 404 if the current location is not in the database, the method proceeds to step 410 and determines at least one signal quality parameter of the audio signal. In step 412, the current location and signal quality parameter is added to the database as new database entry. In step 414 a timestamp is added to the newly created database entry.

From steps 408 and 414, the method proceeds to step 416 which checks whether the number of database entries (database size) exceeds a predefined limit. If it does not exceed the limit then the method ends in step 422. Otherwise, in step 418 one or more entries may be removed with the oldest timestamp values. In step 420 one or more entries may be removed based on the least visited locations i.e. the smallest location visit count value. After step 420, the method ends at step 422. In some examples steps 406, 414 and 418 may be omitted i.e. timestamping is not used. In other examples, steps 408 and 420 may be omitted i.e. the location popularity is not used.

Embodiments described use knowledge on the audio signal corruption which can be correlated to the spatial location obtained from a navigation module. This knowledge can improve the error concealment, for example by preventing intermittent audio by enforcing an audio mute where necessary and by fading in the audio sooner when there is prior knowledge that the audio is expected to stay intact. This avoids the use of conservative audio error concealment strategies which may be configured too conservatively, such that intermittent audio (short segments where audio is present/absent) is avoided, for example by muting the audio for a longer period than necessary.

An error concealment method and apparatus for a mobile radio is described. A current location value is provided by a spatial location receiver. A signal quality parameter associated with the current location value is retrieved from a database if available. If the signal quality parameter is available, a first error concealment method for a received audio signal is selected and applied dependent on the signal quality parameter value. If the signal quality parameter associated with the current location value is not available, and the received audio signal is corrupted, a second (default) more conservative error concealment method is applied to the received audio signal

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method of error concealment of an audio signal for a mobile radio, the method comprising:
receiving a current location value provided by a spatial location receiver;
determining whether at least one signal quality parameter associated with the current location value is available in a database;
in response to the at least one signal quality parameter being available:
selecting a first error concealment method for a received audio signal dependent on the at least one signal quality parameter;
applying the first error concealment method to the received audio signal;
and in response to the at least one signal quality parameter not being available, and
determining that the received audio signal is corrupted:
applying a second error concealment method to the received audio signal.

2. The method of claim 1, wherein the at least one signal quality parameter comprises an audio corruption time duration.

3. The method of claim 2, wherein in response to the audio corruption time duration being below a first time threshold value, the first error concealment method comprises frame repetition.

4. The method of claim 2, wherein in response to the audio corruption time duration being below a first time threshold value, the first error concealment method comprises switching to a secondary broadcast signal that is aligned to the received audio signal in at least one of time, spectrum and level.

5. The method of claim 2, wherein in response to the audio corruption time duration being above a second time threshold value, the first error concealment method comprises at least one of audio fade-in and audio fade-out.

6. The method of claim 2, wherein in response to the audio corruption time duration being above a second time threshold value, the first error concealment method comprises switching to a secondary broadcast signal and fading out at least one of a spectral and level alignment to the received audio signal.

7. The method of any preceding claim, wherein the at least one signal quality parameter comprises an audio corruption rate.

8. The method of any preceding claim, further comprising updating a database, the database comprising a plurality of database entries, each database entry comprising a location value and a signal quality parameter.

9. The method of claim 8 further comprising, in response to the at least one signal quality parameter not being available:
determining the at least one signal quality parameter of the received audio signal; and
updating the database with a database entry comprising the at least one signal quality parameter and the current location value.

10. The method of claim 8 or 9, wherein each database entry further comprises at least one of a timestamp value and a location visit count value, and the method further comprises updating the database with at least one of a timestamp value and a location visit count value for the current location.

11. The method of claim 10, wherein updating the database comprises: in response to the number of entries exceeding a maximum entry value, removing a selection of the plurality of database entries based on at least one of the timestamp value and the location visit count value of each database entry.

12. The method of any preceding claim, wherein determining the at least one signal quality parameter comprises determining that the received audio signal is corrupted.

13. The method of claim 12, wherein the at least one signal quality parameter comprises a proportion of a number of corrupted audio frames during one of a predetermined time duration and predetermined distance.

14. A controller for a mobile radio, the controller comprising:
a navigation input configured to be coupled to a spatial location receiver;
a radio reception condition input configured to receive a radio reception condition signal;
an audio input configured to be coupled to an output of a radio receiver; and
an audio output; wherein
the controller is configured to:
receive a current location value provided by a spatial location receiver;
determine whether at least one signal quality parameter associated with the current location value is available in a database;
in response to the at least one signal quality parameter being available:
select a first error concealment method for the received audio signal dependent on the at least one signal quality parameter;
apply the first error concealment method to the received audio signal;
and
in response to the at least one signal quality parameter not being available, the controller is further configured to:
predict whether the received audio signal will be corrupted from the radio reception condition signal; and
apply a second error concealment method to the received audio signal in response to determining that the received audio signal will be corrupted.

15. The controller of claim 14, further comprising:
a control module coupled to a database, the control module having a first control module input coupled to the navigation input, a second module input coupled to the radio reception condition input and a control module output;
an error concealment module having a first error concealment input coupled to the audio input, a second error concealment input coupled to the control module output, and an error concealment output coupled to the audio output;
wherein in the control module is configured to:
receive the current location value;
determine whether the at least one signal quality parameter associated with the current location value is available in the database;
in response to the at least one signal quality parameter being available:
select a first error concealment method for the received audio signal dependent on the at least one signal quality parameter;
control the error concealment module to apply the first error concealment method to the received audio signal;
in response to the at least one signal quality parameter not being available:
determine whether the received audio signal will be corrupted from the radio reception condition signal;
control the error concealment module to apply the second error concealment method to the received audio signal.
